Europäisches Patentamt

European Patent Office

Office européen des brevets

(11) Publication number: **0 125 478 B1**

(12) **EUROPEAN PATENT SPECIFICATION**

(45) Date of publication of patent specification: **09.10.91** (51) Int. Cl.⁵: **G11B 5/82**, G11B 5/70

(21) Application number: **84103878.9**

(22) Date of filing: **09.04.84**

(54) Magnetic record disk with internal servo track.

(30) Priority: **16.05.83 US 494743**

(43) Date of publication of application:
**21.11.84 Bulletin 84/47**

(45) Publication of the grant of the patent:
**09.10.91 Bulletin 91/41**

(84) Designated Contracting States:
**DE FR GB**

(56) References cited:
**JP-A-54 651 0**
**US-A- 3 426 337**

**IBM TECHNICAL DISCLOSURE BULLETIN, vol. 21, no. 10, March 1979, pages 4259-4260, New York, US; R.E. ACOSTA et al.: "Floppy disc embossing for servo applications"**

**IEEE Transactions on Magnetics, September 1980, Volume MAG-16 Number 5, N. Koshino and S. Ogawa "optical method of the head positioning in magnetic disc system" p. 631-633;**

(73) Proprietor: **International Business Machines Corporation**
**Old Orchard Road**
**Armonk, N.Y. 10504(US)**

(72) Inventor: **Krongelb, Sol**
**RFD No. 2, Box 108**
**Katonah New York 10536(US)**
Inventor: **Romankiw, Lubomyr Taras**
**7 Dunn Lane**
**Briarcliff Manor New York 15010(US)**
Inventor: **Scranton, Robert Alan**
**Orchard Drive**
**South Salem New York 10590(US)**
Inventor: **Thompson, David Allen**
**Twin Lakes Road**
**South Salem New York 10590(US)**

(74) Representative: **Burt, Roger James, Dr.**
**IBM United Kingdom Limited Intellectual Property Department Hursley Park**
**Winchester Hampshire SO21 2JN(GB)**

## Description

This invention relates to magnetic record disks with an internal servo track and to methods of making such magnetic record disks.

Previously servo data has been recorded by making patterns in the magnetic recording portions of the disk, causing mechanical discontinuities in the magnetic recording media. For example, in one case, the magnetic recording media was etched to form the servo control patterns. Such servo patterns reduce the bit storage density and/or increase the error rate, although the error rate can be minimised if the storage density is sufficiently low that the bit patterns of the servo control signal become innocuous because they are small relative to the size of the magnetic recording data storage area for a single bit of data.

In IEEE Transactions on Magnetics Volume MAG 16 pp631 to 633 (Sep 1980), there is described a magnetic record disk with a servo recording in the form of alternately coloured and uncoloured circular tracks in an anode-oxidised substrate coating just below the magnetic recording medium. JP-A-54-6510 discloses a similarly constructed magnetic record disk.

IBM Technical Disclosure Bulletin Vol 21, No 10, p 4259-4260 (Mar 1979) describes a floppy magnetic record disk provided with an embossed, spiral groove for electrostatic servo control.

US-A- 3426337 discloses a record disk provided with a servo reference pattern formed in a layer of material coated on the top surface of the disk. The preferred form of the reference pattern comprises alternating areas of differing reflectivity.

IBM Technical Disclosure Bulletin volume 21, No. 6, November 1978, page 2506; R.I. Potter: "Capacitive Servoing on Topographic Variations" discloses a magnetic recording disk where topographic variations in a conducting surface are used to define servo tracks which can be detected capacitively. The servo tracks are formed either by stamping, milling, plating or vacuum depositing a pattern in a conducting substrate or by selectively depositing a conductive layer on an underlying non-conductive substrate. The servo tracks are then covered by a dielectric smoothing layer. A magnetic recording material is then placed over this dielectric layer. The pattern formed by the surface topology of the conducting surface or layer is said to be the height-variation analog of conventional, magnetically encoded servo disk patterns. In view of the fact that there must be a relatively large vertical topography in the pattern, in order to obtain sufficient capacitive contrast, a relatively thick smoothing layer is necessary.

The invention seeks, therefore, to provide a magnetic record disk with a servo recording which has a minimal effect on the recoding and reading of data in the magnetic recoding medium of the disk and mitigates the disadvantages of the prior art.

In accordance with a first aspect of the present invention therefore, there is provided a magnetic record disk comprising a substrate, a dielectric layer disposed on the substrate, a patterned servo track of conductive material disposed on the dielectric layer, and a recording medium disposed over the patterned servo track with the magnetic recording medium having a flat surface, the record disk being characterised in that the patterned servo track comprises a thin metallic film disposed in a discontinuous pattern on the dielectric layer.

Thus, in a disk in accordance with the present invention, the servo tracks are formed by a conducting film disposed in a pattern on the dielectric layer so as to provide a contrast therewith, as opposed to a thick layer with a surface having a topology such that a contrast results from height variations. The film need only be thick enough to ensure conductivity.

In accordance with a second aspect of the invention, there is provided a method of making a magnetic record disk in accordance with the first aspect of the invention, the method comprising the steps of: (i) disposing in a pattern on a dielectric layer a thin metallic film to form a servo track and (ii) depositing a magnetic recording medium (14;24) over the servo track and the dielectric layer.

Step (i) can comprise depositing a thin metallic film on the dielectric layer and then using a subtractive technique while masking the portions of metal to be retained. Alternatively, this step can comprise the use of a lift-off technique of depositing a layer of resist which has openings in it where the pattern is to remain on the dielectric layer in combination with an additive deposition technique. Either way, the result of the process is to produce a thin metallic film which is discontinuous, thus defining the servo track pattern.

Preferably, the servo track is adapted to be detected by means of a capacitive sensor.

How the invention can be carried out will now be described by way of example, with reference to the accompanying drawings, in which:-

FIG. 1 represents a cross-section of a magnetic record disk having an optical and capacitive servo track located beneath the magnetic record medium in accordance with this invention; and

FIG. 2 represents a substrate carrying a dielectric layer with a thin film servo pattern formed on it.

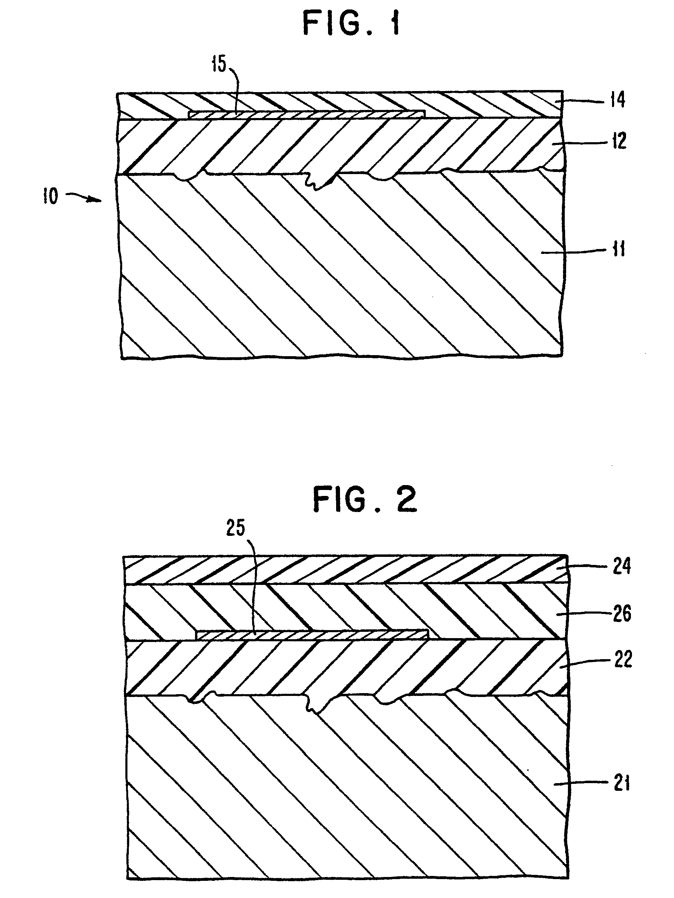

Referring to FIG. 1, a magnetic record disk 10 includes a rigid aluminium substrate 11 coated with a layer 12 of a polymeric, dielectric material. The dielectric layer 12 is coated with a thin film of a metal such as aluminium from which is formed a patterned capacitive and optically reflective servo track 15. Next, a layer 14 of a magnetic recording medium is deposited upon the dielectric layer 12 and the metallic servo track film 15. The dielectric layer 12 is preferably composed of a very similar material to the matrix of the magnetic recording medium 14.

The disk 10 can be flexible and it is not necessary to have the dielectric layer 12 in every case. A flexible disk is especially attractive if the substrate 11 is composed of an insulating material or a poor conductor. Suitable dielectric materials for substrate 11 include polyethylene terephthalate, acetate, silicon, ceramic and glass.

FIG. 1 represents the cross-section of a finished disk 10. Above an aluminium alloy substrate 11 is deposited a thin layer 12 of a dielectric material having a preferable thickness of from about 0.1 to 10 microns, with a typical thickness of about 3 microns. However, the layer 12 can be up to about 150 microns thick. The dielectric of layer 12 can be composed of materials such as epoxy-phenolic resin, polyurethane, or polyimide. The purpose of dielectric layer 12 is to provide optical and capacitive (dielectric) contrast, which will facilitate reading of data stored either optically and/or capacitively.

Additionally, layer 12 can provide a smooth layer on the surface of the substrate 11 and so the provision of layer 12 can possibly eliminate the need for turning the substrate 11 on a milling machine or lapping machine to smooth the rough peaks (asperities) from the original surface of substrate 11.

Preferably, the dielectric layer 12 is chosen to be compatible with the material comprising the magnetic medium 14, in order to provide similar coefficients of expansion and contraction and to enhance adhesion of the two layers together.

## EXAMPLE 1

The recording medium 14 is composed of a particulate material (magnetic-oxide particles) dispersed in an epoxy-phenolic matrix. The dielectric layer 12 is composed of an epoxy-phenolic preferably similar or identical to the matrix of medium 14.

## EXAMPLE II

Magnetic recording medium 14 is composed of a matrix of polyurethane carrying magnetic particles. The polymeric dielectric layer 12 is composed of polyurethane.

## EXAMPLE III

The recording medium 14 is a sputtered thin film composed of a metal or iron oxide such as gamma iron oxide, $Fe_2O_3$. The dielectric layer 12 is composed of polyimide because of its capacity to withstand high temperatures with little alteration of its chemical and electrical properties. The polyimide can be heated to 400 degrees C during sputtering of the iron oxide with substantially no measurable change in the composition or characteristics of the dielectric layer 12. The polyimide can also be heated in air up to 400 degrees C without damage.

The layer deposited on the dielectric layer 12 is a patterned thin metallic film 15 which preferably is composed of chromium. Film 15 is thick enough to ensure the conductivity typical of a metallic film, say 0.01 microns. An alternative metal for film 15 is aluminium.

Patterning of the film is achieved by means of a subtractive technique such as sputter etching or wet chemical etching using a mask or the like to protect the portions of metal to be retained, or by means of an additive vacuum deposition technique such as sputtering or evaporation in conjunction with the well known lift-off techniques of depositing over a layer of resist which has openings where the pattern is to remain on the substrate. Film 15 is extremely thin, approximately the magnitude of the surface roughness on existing disks or less. The degree of roughness is that existing after buffing the top surface of film 14.

Preferably, layer 15 is from 0.005 to 0.1 microns thick (gross) and layer 14 is about from 0.1 to 3 microns thick (chosen for magnetic reasons).

The magnetic recording medium film 14 is deposited in a standard manner, followed by the usual buffing and lubrication.

In the current state of the art of magnetic record disk files, a magnetic transducer head for reading and writing data is carried by a slider which flies over the magnetic recording medium 14. In this case, the medium is adapted to include capacitive or optical indicia which can be employed to indicate the physical locations on the disk to a capacitive and/or optical sensor or sensors on the slider, so that the magnetic recording medium and head will not be required to include the location data required to operate the servo system which positions the slider and the heads it carries.

An advantage of the present invention is that the internal servo-control data on the disk disturbs or modulates the magnetic recording data in a read-record channel minimally.

Another advantage of this invention is that it does not increase the effective flying height of the magnetic recording head relative to the magnetic recording medium, so that the magnetic recording resolution can be optimal.

A third feature of this invention is that it is compatible with existing magnetic medium formulations as well as new magnetic medium formulations, including matrices of polyurethane, and polymeric underlayers.

A fourth feature of this invention is that it provides the versatility of being compatible with servo read heads which operate on both the capacitive and the optical contrast principles.

A fifth advantage of this invention is that the critical head-to-disk interface is unchanged in that the servo layer is buried below the magnetic recording medium so it does not affect lubrication, start-stop characteristics and glide height of the head.

It should be understood that the term optical contrast is used here to denote both optical and other electromagnetic radiation to which the medium is transparent. Thus infrared, or ultraviolet light or other radiation outside the visual spectrum could be employed.

A primary requirement of a magnetic recording disk is that the position pattern should not interfere with the process of magnetic recording. The effects can be measured directly by observing the amplitude modulation of higher frequency magnetically recorded data by the position-signal pattern of the metallic film.

The modulation sidelobes of the magnetic signal recorded and read on a structure similar to FIG. 1 were determined experimentally to be 28db below the desired read signal amplitude. This low sidelobe amplitude was below the noise level of the wideband data channel. Its presence could be determined only by the use of a sweeping spectrum analyser. This low level of amplitude modulation indicated that the position signal pattern will not interfere with the magnetic recording or reading of data. This experiment used a magnetic medium having a thickness of 0.5 microns and a patterned film thickness of 0.025 microns. Furthermore, we note that the recording and playing of the very high frequency magnetic data, corresponding to the resolution limits of the media, takes place at the upper portion of the magnetic medium (near the recording head) away from the patterned metallic film.

However, for extremely thin magnetic layers, and for very high resolutions, it may be required to isolate the magnetic medium by disposing it farther from the position signal pattern.

FIG. 2 represents the cross-section of an alternative disk structure which overcomes this problem. A substrate 21 carries a dielectric layer 22 with a thin film servo pattern 25 thereon. The servo pattern 25 and layer 22 are covered with another dielectric layer 26 which in turn is covered with the magnetic medium film 24. In this way the magnetic medium is separated from the servo pattern 25 which is advantageous because the dielectric layer 26 can further enhance the smoothness and adhesion of the magnetic medium 24. In the case of optical sensing of the servo pattern, the dielectric layer 26 can also enhance the optical contrast of the pattern.

## Claims

1. A magnetic record disk comprising a substrate (11;21), a dielectric layer (12,22) disposed on the substrate, a patterned servo track of conductive material (15;25) disposed on the dielectric layer, and a recording medium (14;24) disposed over the patterned servo track with the magnetic recording medium having a flat surface, the record disk being characterised in that the patterned servo track comprises a thin metallic film disposed in a discontinuous pattern on the dielectric layer.

2. A disk as claimed in claim 1, wherein the thin metallic film is from 0.005 to 0.1 micrometres thick.

3. A disk as claimed in claim 2 wherein the thin metallic film is approximately 0.1 micrometres thick.

4. A disk as claimed in any preceding claim wherein the magnetic recoding medium has a thickness of 0.1 to 3 micrometres.

5. A disk as claimed in any preceding claim wherein the magnetic recoding medium (14;24) is composed of magnetic particles bound in a matrix material and the dielectric layer (12;22) is composed of a material having physical characteristics similar to those of the matrix material.

6. A disk as claimed in claim 5 wherein the dielectric layer (12;22) is composed of the same material as the matrix material.

7. A disk as claimed in claim 6 wherein the magnetic recoding medium (14;24) is composed of metallic particles bound in an epoxy-phenolic material matrix and the dielectric layer (12;22) is composed of epoxy-phenolic material.

8. A disk as claimed in claim 6 wherein the magnetic recoding medium (14;24) is composed of metallic particles bound in an polyurethane matrix and the dielectric layer (12;22) is composed of polyurethane.

9. A disk as claimed in any one of claims 1 to 4 wherein the dielectric layer (12;22) is composed of polyimide and the magnetic recording medium (14;24) is composed of sputtered magnetic iron oxide.

10. A disk as claimed in any one of the preceding claims comprising an additional layer (26) of dielectric material disposed between the thin metallic film (25) and the magnetic recoding medium (24).

11. A disk as claimed in any preceding claim wherein the the substrate (11;21) is a metallic substrate.

12. A method of making a magnetic record disk as claimed in any one of the preceding claims, the method comprising the steps of
    (i) disposing in a discontinuous pattern on a dielectric layer (12;22) a thin metallic film (15;25) to form a servo track; and
    (ii) depositing a magnetic recording medium (14;24) over the servo track and the dielectric layer.

13. A method of making a disk as claimed in claim 12 wherein the thin metallic film is disposed in a pattern on the surface of the dielectric layer by depositing a thin metallic film on the dielectric layer and then using a subtractive technique while masking the portions of metal to be retained.

14. A method of making a disk as claimed in claim 12 wherein the thin metallic film is disposed in a pattern on the surface of the dielectric layer by a lift-off technique of depositing a layer of resist which has openings in it where the pattern is to remain on the dielectric layer in combination with an additive deposition technique.

**Revendications**

1. Disque d'enregistrement magnétique comportant un substrat (11;21), une couche diélectrique (12,22) disposée sur le substrat, une piste d'asservissement structurée réalisée en un matériau conducteur (15;25) et disposée sur la couche diélectrique, et un support d'enregistrement (14;24) disposé sur la piste d'asservissement structurée, le support d'enregistrement magnétique possédant une surface plane, le disque d'enregistrement étant caractérisé en ce que la piste d'asservissement structurée comprend une pellicule métallique mince disposée selon une structure discontinue sur la couche diélectrique.

2. Disque selon la revendication 1, dans lequel la pellicule métallique mince possède une épaisseur comprise entre 0,005 et 0,1 micron.

3. Disque selon la revendication 2, dans lequel la pellicule métallique mince possède une épaisseur égale à environ 0,1 micron.

4. Disque selon l'une quelconque des revendications précédentes, dans lequel le support d'enregistrement magnétique possède une épaisseur comprise entre 0,1 et 3 microns.

5. Disque selon l'une quelconque des revendications précédentes, dans lequel le support d'enregistrement magnétique (14;24) est constitué par des particules magnétiques liées dans un matériau formant matrice, et la couche diélectrique (12;22) est constituée par un matériau possédant des caractéristiques physiques semblables à celles du matériau de la matrice.

6. Disque selon la revendication 5, dans lequel la couche diélectrique (12;22) est constituée par le même matériau que celui de la matrice.

7. Disque selon la revendication 6, dans lequel le support d'enregistrement magnétique (14;24) est constitué par des particules métalliques liées dans une matrice formée d'un matériau époxy-phénolique, et la couche diélectrique (12;22) est constituée par un matériau époxy-phénolique.

8. Disque selon la revendication 6, dans lequel le support d'enregistrement magnétique (14;24) est constitué de particules magnétiques liées dans une matrice de polyuréthane et la couche diélectrique (12;22) est constituée par du polyuréthane.

9. Disque selon l'une quelconque des revendications 1 à 4, dans lequel la couche diélectrique (12;22) est constituée par du polyimide et le support d'enregistrement magnétique (14;24) est constitué par de l'oxyde de fer magnétique déposé par pulvérisation.

10. Disque selon l'une quelconque des revendications précédentes, comprenant une couche additionnelle (26) formée d'un matériau diélectrique et disposée entre la pellicule métallique mince (25) et le support d'enregistrement magnétique (24).

11. Disque selon l'une quelconque des revendications précédentes, dans lequel le substrat (11;21) est un substrat métallique.

**12.** Procédé pour fabriquer un disque d'enregistrement magnétique selon l'une quelconque des revendications précédentes, le procédé incluant les étapes consistant à
    i) disposer selon une structure discontinue sur une couche diélectrique (12;22), une pellicule métallique mince (15;25) pour former une piste d'asservissement ; et
    ii) déposer un support d'enregistrement (14;24) sur la piste d'asservissement et sur la couche diélectrique.

**13.** Procédé pour fabriquer un disque selon la revendication 12, selon lequel on dépose la pellicule métallique mince sous la forme d'une structure sur la surface de la couche diélectrique en déposant une pellicule métallique mince sur la couche diélectrique, puis en utilisant une technique soustractive tout en masquant les parties métalliques devant être conservées.

**14.** Procédé pour fabriquer un disque selon la revendication 12, selon lequel on dépose la pellicule métallique mince sous la forme d'une structure sur la surface de la couche diélectrique au moyen d'une technique à décollement selon laquelle on dépose une couche de résine photosensible, dans laquelle sont ménagées des ouvertures dans lesquelles la structure doit subsister sur la couche diélectrique, en combinaison avec une technique de dépôt additive.

**Patentansprüche**

**1.** Platte für magnetische Aufzeichnung mit einem Träger (11; 21), mit einer dielektrischen Schicht (12; 22), die auf dem Träger angeordnet ist, mit einer gemusterten Servospur aus leitendem Material (15; 25), die auf der dielektrischen Schicht angeordnet ist und mit einem Aufzeichnungsmedium (14; 24), das über der gemusterten Servospur angeordnet ist, wobei das magnetische Aufzeichnungsmedium eine ebene Oberfläche besitzt, wobei die Aufzeichnungsplatte dadurch gekennzeichnet ist, daß die gemusterte Servospur eine dünne metallische Schicht aufweist, die in einem diskontinuierlichen Muster auf der dielektrischen Schicht angeordnet ist.

**2.** Platte nach Anspruch 1, bei welcher die dünne metallische Schicht von 0,005 bis 0,1 Mikrometer dick ist.

**3.** Platte nach Anspruch 2, bei welcher die dünne metallische Schicht ungefähr 0,1 Mikrometer dick ist.

**4.** Platte nach irgendeinem vorgehenden Anspruch, bei welcher das magnetische Aufzeichnungsmedium eine Dicke von 0,1 bis 3 Mikrometer aufweist.

**5.** Platte nach irgendeinem vorgehenden Anspruch, bei welcher das magnetische Aufzeichnungsmedium (14; 24) aus magnetischen Teilchen besteht, die in einem Matrix-Material gebunden sind und die dielektrische Schicht (12; 22) aus einem Material besteht, das jenen des Matrix-Materials ähnliche physikalische Merkmale aufweist.

**6.** Platte nach Anspruch 5, bei welcher die dielektrische Schicht (12; 22) aus demselben Material besteht wie das Matrix-Material.

**7.** Platte nach Anspruch 6, bei welcher das magnetische Aufzeichnungsmedium (14; 24) aus metallischen Teilchen besteht, die in einer Epoxy-Phenol-Materialmatrix gebunden sind und die dielektrische Schicht (12; 22) aus einem Epoxy-Phenol-Material besteht.

**8.** Platte nach Anspruch 6, bei welcher das magnetische Aufzeichnungsmedium (14; 24) aus metallischen Teilchen besteht, die in einer Polyurethan-Matrix gebunden sind und die dielektrische Schicht (12; 22) aus Polyurethan besteht.

**9.** Platte nach irgendeinem der Ansprüche 1 bis 4, bei welcher die dielektrische Schicht (12; 22) aus Polyimid besteht und das magnetische Aufzeichnungsmedium (14; 24) aus gesputtertem magnetischem Eisenoxid besteht.

**10.** Platte nach irgendeinem der vorgehenden Ansprüche, mit einer zusätzlichen Schicht (26) aus dielektrischem Material, die zwischen der dünnen metallischen Schicht (25) und dem magnetischen Aufzeichnungsmedium (24) angeordnet ist.

**11.** Platte nach irgendeinem der vorgehenden Ansprüche, bei welcher der Träger (11; 21) ein metallischer Träger ist.

**12.** Verfahren zum Herstellen einer Platte für magnetische Aufzeichnungen nach irgendeinem der vorgehenden Ansprüche, wobei das Verfahren die folgenden Schritte umfaßt:
    (i) Anordnen einer dünnen metallischen Schicht (15; 25) in einem diskontinuierlichen Muster auf einer dielektrischen Schicht (12; 22), um eine Servospur auszubilden und

(ii) Anordnen eines magnetischen Aufzeichnungsmediums (14; 24) über der Servospur und der dielektrischen Schicht.

13. Verfahren zum Herstellen einer Platte nach Anspruch 12, bei welchem die dünne metallische Schicht in einem Muster auf der Oberfläche der dielektrischen Schicht durch Aufbringen einer dünnen metallischen Schicht auf die dielektrische Schicht und sodann durch Verwenden einer Subtraktivtechnik während des Abdeckens der zurückzuhaltenden Metallteile angeordnet wird.

14. Verfahren zum Herstellen einer Platte nach Anspruch 12, bei welchem die dünne metallische Schicht in einem Muster auf der Oberfläche der dielektrischen Schicht durch eine Abhebetechnik zum Aufbringen einer Resist-Schicht, die in ihr Öffnungen aufweist, wo das Muster auf der dielektrischen Schicht zurückbleiben soll, in Kombination mit einer Technik für Additivaufbringen angeordnet wird.

# FIG. 1

# FIG. 2